# DEMANDE DE BREVET EUROPEEN

(11) **EP 2 128 806 A2**
(43) Date de publication de la demande: **02.12.2009**
(21) Numéro de dépôt: 09169584.1
(22) Date de dépôt: 24.10.2005
(51) Int. Cl.: G06K 19/077

(54) **Dispositif électronique personnalisé du type clé USB et procédé de fabrication d'un tel dispositif**

(30) Priorité: 02.11.2004 FR 0452494
(62) Demande divisionnaire de: 05858508.4
(71) Demandeur: Gemalto SA, 92190 Meudon (FR)
(72) Inventeur: Fidalgo, Jean-Christophe, 13420, GEMENOS (FR); Valette, Laurent, 13013, MARSEILLE (FR); Karlisch, Thierry, 13600, LA CIOTAT (FR); Garnier, Rémi, 13390, AURIOL (FR); Biremont, Jean-Charles, 13530, TRETS (FR); Dossetto, Lucile, 13600, LA CIOTAT (FR)

(57) **Abrégé**

L'invention concerne un dispositif électronique comprenant une section destinée à être connectée dans un port d'un d'appareil externe et une section restant à l'extérieur de l'appareil pour manipulation,
- une impression et/ou une personnalisation graphique(s) sur un support,
- une enveloppe de protection (61, 70) recouvrant le support de manière à rendre visible l'impression et/ou la personnalisation graphique à travers l'enveloppe ;
- Le dispositif se distingue en ce que le support portant l'impression et/ou personnalisation graphique(s) comprend également ladite connexion directe.

L'invention concerne également un procédé de réalisation du dispositif et une utilisation en tant que badge d'identification et/ou d'accès personnel.

## Description

L'invention concerne les dispositifs électroniques personnalisés du type clé USB et un procédé de fabrication d'un tel dispositif.

Les clés USB sont destinées à être connectées à un port périphérique USB (du nom de la norme Universal Serial Bus en anglais) d'un appareil de télécommunication tel qu'un ordinateur personnel. Le domaine d'utilisation est aussi vaste que celui des cartes à puce ou/et des lecteurs de carte (Transport de données avec ou sans sécurisation, accès Internet, Identification, e-commerce, paiement en ligne, cryptographie ...etc.)

D'une manière générale, une clé selon l'invention comporte une portion rentrant dans le port de l'appareil et une portion restant à l'extérieur du port pour manipulation.

Les clés USB actuellement commercialisées sont relativement onéreuses et leur personnalisation graphique est limitée. En effet toutes ces clés sont équipées d'un connecteur USB standard, d'une interface mécanique et électronique et d'un boîtier extérieur permettant d'assurer la protection et le maintien mécanique du système.

La demande PCT/FR 02/ 03247 décrit un procédé de fabrication d'une clé électronique USB, dans lequel on découpe un module ayant des plages de contact compatibles avec le format USB, à partir d'une carte à puce, puis on ajuste son épaisseur, au moins au niveau des plages de contact, de manière à présenter une épaisseur conforme à la norme USB.

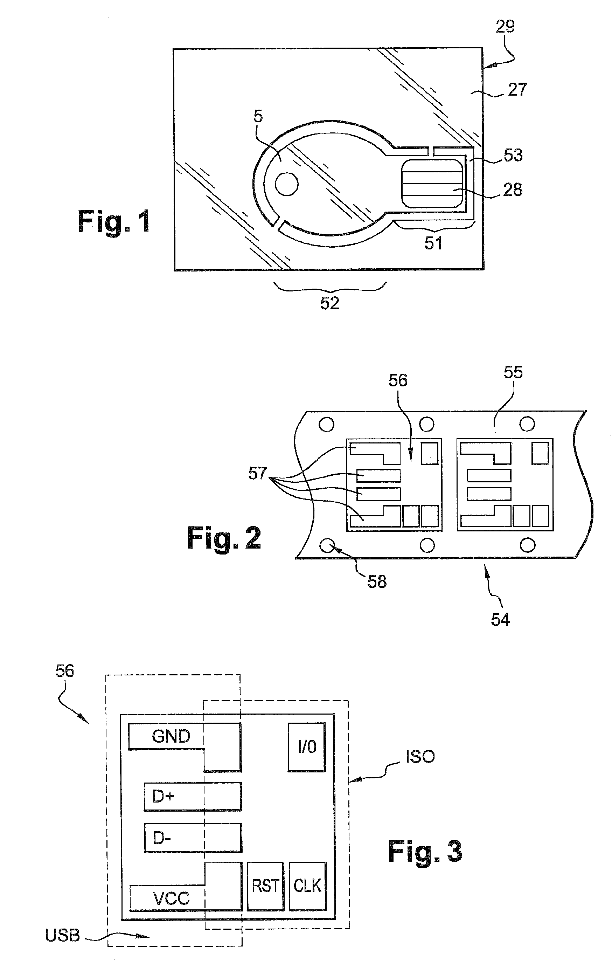

La figure 1 illustre la carte à puce obtenue selon ce procédé ci-dessus d'où est découpée la clé électronique 5. La clé comporte une portion avant 51 destinée à être introduite dans le port USB d'un appareil de communication. Cette portion comporte un module avec plages de contact linéaires 28 et une puce électronique disposée en dessous et connectée aux plages. La clé comporte également une portion arrière 52 destinée à la préhension. La clé est à ce stade presque entourée d'une pré-découpe partielle 53 à l'exception des bretelles la reliant au corps de carte 27.

La clé est également proposée avec un adaptateur métallique entourant les contacts et protégeant le module. L'adaptateur annulaire requiert une étape de modification notamment sous forme de rainures métalliques pour offrir une fonction de surélévation des contacts dans la bague.

Dans une variante sans adaptateur métallique, il est nécessaire d'effectuer une adaptation locale de l'épaisseur de la clé à celui d'un port USB par des cales fixées à la mini-carte sous les plages de contact.

Dans cette dernière variante, la clé a l'inconvénient d'exposer le corps de préhension, situé en dehors du connecteur, à des contraintes importantes liées à la manipulation et à l'utilisation (chocs, flexions, rayures). Par exemple, le poids d'un trousseau de clé accroché à un orifice du corps peut provoquer des efforts de flexion/torsion pouvant endommager ou même casser le corps notamment à la jonction du corps avec le connecteur.

Ce document demeure muet quant à la personnalisation électrique et graphique de la clé. Toutefois, au vu de la forme des contacts au format USB, le procédé à l'inconvénient de requérir des machines de personnalisation électrique mettant en oeuvre un protocole de personnalisation électrique USB.

Parmi d'autres clés existantes, on trouve notamment des clés comportant un circuit imprimé portant des composants électroniques montés en surface (CMS) et sur lequel sont soudées des tiges de contact ou connexion. L'ensemble est disposé dans une coque plastique inférieure et une coque supérieure recouvrant le circuit intégré sauf l'extrémité des lames de contact. Dans certains modèles de clé, les coques sont translucide avec une coloration et laissent deviner les composants fixés sur un support de circuit imprimé. Des impressions et/ou personnalisations graphiques sont effectuées à la surface de la coque.

En cas d'endommagement de la clé, tels que cassures ou abrasion nécessitant le remplacement de la coque, aucune solution n'est proposée pour remplacer la coque.

Une solution serait de retourner la clé à un centre de personnalisation graphique pour y personnaliser graphiquement une nouvelle coque; ceci est d'autant plus indispensable qu'il existe un rapport entre des données numériques stockées dans la clé d'une part et l'impression et/ou personnalisation graphique d'une même clé d'autre part.

C'est le cas par exemple d'applications qui nécessitent la réalisation d'un graphisme décoratif ou logo commun à un lot de clés. Pour cela, la personnalisation graphique comporte une étape de lecture d'un code client inscrit numériquement dans un circuit pour commander une personnalisation graphique et/ou décoration particulière(s). A cet effet, il est nécessaire d'avoir une installation de personnalisation graphique qui puisse lire les données numériques et sélectionner ou composer les données graphiques en fonction de ces données électriques.

L'invention vise à résoudre ces inconvénients précités. Elle a pour objectif principal de concevoir une structure de clé comportant une impression et/ou personnalisation graphique(s) au niveau d'un corps de préhension de la clé et dont le corps de préhension soit facilement réparable ou remplaçable notamment par l'utilisateur final en cas d'endommagement.

L'invention propose également un procédé de fabrication économique d'une telle clé.

L'invention dans sa structure consiste à doter la clé d'une enveloppe de protection transparente disposée directement au-dessus d'un support portant une impression et/ou personnalisation graphique(s), cette enveloppe étant indépendante du graphisme et remplaçable facilement en cas d'endommagement.

De préférence, le support, le circuit électronique et la personnalisation électrique et graphique sont réalisés selon un procédé de fabrication de mini-carte à puce.

Ainsi, la clé avec sa personnalisation graphique et/ou impression est économique à fabriquer et l'utilisateur final peut effectuer lui-même le remplacement sans avoir besoin de ramener la clé au fournisseur ou centre de personnalisation graphique et électrique.

A cet effet, l'invention a pour objet un dispositif électronique comprenant une section munie d'une connexion destinée à être connectée à un port d'un d'appareil externe et une section pour manipulation,
- une impression et/ou une personnalisation graphique(s) sur un support,
- une enveloppe de protection recouvrant le support de manière à rendre visible l'impression et/ou la personnalisation graphique à travers l'enveloppe.

Le dispositif se distingue en ce que le support portant l'impression et/ou personnalisation graphique(s) comprend également ladite connexion directe.

De préférence, l'enveloppe est une coque en matériau transparent.

Selon d'autres caractéristiques de l'invention :
- l'enveloppe comporte une fenêtre centrée sur l'impression et/ou personnalisation graphique(s);
- le support comprend un corps de carte à puce contenant un module électronique comportant des contacts au format USB;
- la coque inférieure comporte un méplat à l'aplomb des contacts de manière à adapter l'épaisseur du support à l'épaisseur standard d'un port USB;

L'invention a également pour objet un procédé de fabrication d'un dispositif électronique, ledit procédé comportant les étapes suivantes :
- réalisation d'un support comportant une connexion pour connecter directement un appareil externe,
- réalisation d'une impression et/ou personnalisation graphique(s) sur le même support,
- disposition d'une enveloppe de protection recouvrant le support de manière à rendre visible l'impression et/ou la personnalisation graphique(s) à travers l'enveloppe.

Selon d'autres caractéristiques de l'invention:
- la coque est transparente;
- le procédé comporte une étape d'adaptation de l'épaisseur du support au niveau des contacts à l'épaisseur d'un port USB à l'aide d'un méplat prolongeant la coque inférieure jusque sous les contacts;
- le support est extrait du corps de carte;

D'autres particularités et avantages de l'invention apparaîtront de de la description d'exemples non limitatifs en regard des dessins ci-après:
- La figure 1, décrite précédemment, représente schématiquement une carte à puce au format standard ISO de l'art antérieur de laquelle est extraite une clé USB ;
- La figure 2 représente une vue de dessus d'un ruban utilisé par le procédé de l'invention et portant des microcircuits ou module;
- La figure 3 représente un module selon une variante préféré de l'invention comportant des plages de contact au format USB et ISO;
- La figure 4 représente schématiquement une vue de dessus d'une carte à puce selon l'invention après personnalisation graphique et avant extraction ;
- La figure 5 représente une vue éclatée en perspective des constituants d'une clé selon l'invention en cours d'assemblage;
- La figure 6 représente une clé obtenue selon un mode de mise en oeuvre du procédé de l'invention ;

A la figure 2, le procédé de fabrication d'une clé électronique USB, comporte une étape selon laquelle on part d'un ruban continu 54 tel que celui utilisé dans le domaine de la carte à puce, basé sur une grille métallique gravée ou estampée. Le ruban dans l'exemple, est constitué d'un film support diélectrique 55 portant une série de microcircuits ou module 56 comportant chacun des motifs conducteurs. Les motifs représentent des plages de contacts 57. Une puce électronique est fixée et ses plots sont reliés électriquement par des fils de connexion à travers des puits ménagés dans le support diélectrique. Tout autre moyen de connexion connu du domaine carte à puce peut convenir.

Une protection sous forme d'un dépôt d'une goutte de résine isolante recouvre l'ensemble formé de la puce et fils de connexion.

Le diélectrique est par exemple un film en verre-epoxy. Il se présente sous forme de ruban continu enroulable dans des bobines et de préférence avec des perforations latérales 58 pour son entraînement.

En alternative, le ruban peut être totalement en sous forme de grille en métal fin dans lequel les motifs sont partiellement prédécoupés.

Comme dans la technologie carte à puce, le procédé met donc en en oeuvre le même ruban, ainsi que des étapes de définition de plages de contact, le cas échéant pistes conductrices, fixation de puce, connexion, enrobage de la puce, test électrique et extraction du module par découpe

Comme représenté sur la figure 3, les plages de contact du module sont définies de manière à correspondre aux pattes de connexion électrique d'un port de type USB ; à savoir VCC pour l'alimentation en courant, une autre GND pour la mise à la masse, les deux autres "D+, D-" pour la communication des données.

Dans une réalisation préférée, le module présente également des plages des contacts complémentaires RST, CLK, I/O de manière à présenter des contacts de type ISO et permettre une communication selon le protocole ISO notamment au cours du test et/ou de l'initialisation de la puce et/ou lors de la personnalisation électrique. Les contacts complémentaires sont placés derrière les contacts USB entre les contacts USB et la coque ou en retrait par rapport à l'avant du connecteur afin de ne pas gêner la connexion USB standard avec un port USB ou de manière à être dissimulé ultérieurement par une coque au autre.

Ainsi, l'invention permet une personnalisation (et/ou test électrique et/ou initialisation) aisée des modules sans changer l'outil de production carte à puce, même entre deux lots de carte à puce avec le même protocole de communication ISO. Cet aspect de l'invention peut être indépendant de l'aspect graphique et de l'enveloppe de protection mais il peut contribuer à la réalisation économique d'une clé. L'invention peut s'accommoder également d'une personnalisation de type USB et uniquement de contacts électriques au format USB.

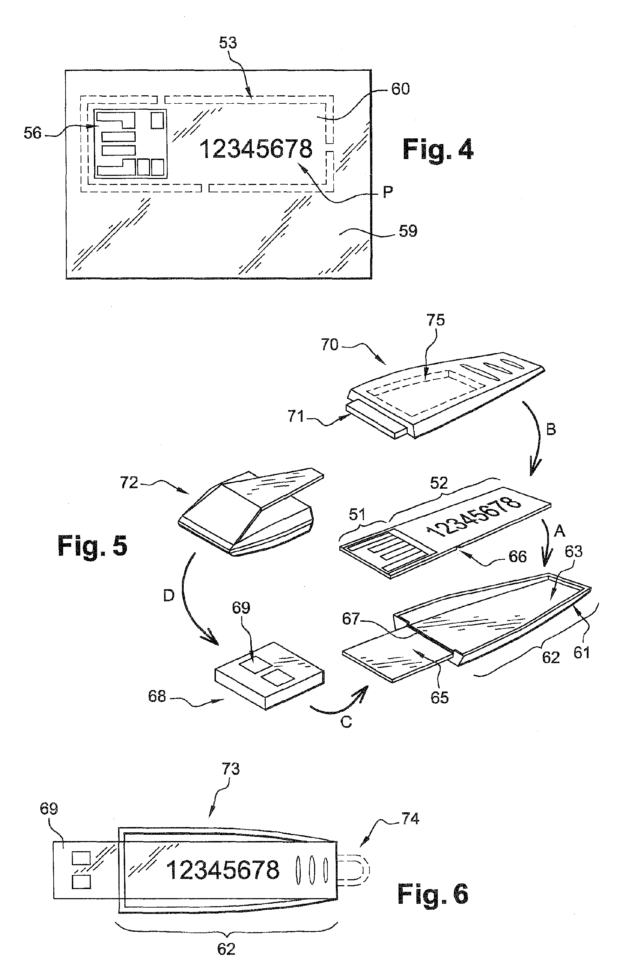

A la figure 4, le module électronique isolé a été inséré par une opération d'encartage "du type carte à puce" dans une cavité d'un corps de carte 59 au format ISO comme à la figure 1.

La carte peut comporter avant encartage une impression graphique décorative sur une ou ses deux faces principales. Cette opération peut être réalisée très facilement et avec une qualité optimale selon la technologie carte à puce contrairement aux clés qui ont l'impression sur la coque.

La carte de l'invention peut comporter également une pré-découpe partielle 53 du support 60 de manière à faciliter son extraction ultérieurement notamment par pression des doigts comme à la figure 1.

La carte reçoit ensuite une personnalisation graphique 61 illustrée par les numéros "12345678". L'impression est en général de type décoratif, comme par exemple un fond décoratif, un tableau, dessin. La personnalisation graphique est en général de type informatif et peut comprendre notamment un motif, un logo, des données alphanumériques, un nombre, des codes barres en rapport ou non avec des informations numériquement contenues dans la puce électronique. Elles peuvent être réalisées toutes deux sur l'une ou les deux faces de la carte.

Comme sur les équipements destinés à la personnalisation des cartes à puce standard, la machine de personnalisation permet d'associer les données de personnalisation électrique et graphique de la carte.

Avant impression, on peut effectuer une vérification ou sélection automatique de l'impression par lecture de la puce pour éviter des erreurs d'appairage entre une personnalisation électrique et graphique. Ainsi par exemple, des clés secrètes peuvent être associées à des données imprimées en surface du corps. Des personnalisations différentes, à la demande de chaque client ou individu, peuvent être réalisées d'un support à l'autre dans un flux continu de carte à imprimer.

Le support 60 comportant la personnalisation graphique et/ou électrique est ensuite extrait de la carte ISO 59 pour être introduite dans une coque ou boîtier en matière plastique. L'opération d'extraction peut être manuelle si le support est prédécoupé.

L'assemblage de la clé est illustré à la figure 5. On y observe les étapes de montage dans l'ordre des flèches (A, B, C, D). En particulier, une coque 61 comportant deux parties essentielles: une partie concave 62 offrant un espace de réception 63 d'une partie 52 du support portant l'impression graphique et un méplat 65 ou plateau prolongeant la partie concave. Après assemblage, le support repose totalement sur la coque inférieure et le méplat s'étend totalement sous une partie avant 51 du support comportant les plages de contact 57.

Le méplat a pour fonction de compléter l'épaisseur du support au niveau des plages de contact de manière à avoir une épaisseur totale à ce niveau conforme à la norme USB. La carte à puce d'où est extrait le support a une épaisseur d'environ 0,76 mm tandis que, l'épaisseur USB à atteindre est d'environ 1, 95 mm.

Le support peut comporter sur sa face inférieure une rainure transversale 66 adjacente au module. Elle a pour fonction de venir se loger dans une nervure correspondante 67 du boîtier située à la jonction des deux sous parties 65/62 de la coque et bloquer le support en position.

D'autres moyens de fixation, démontable ou non, notamment par collage, clip, glissière connus de l'homme de l'art pour maintenir le support en place dans la coque peuvent compléter la coque et/ ou le support.

La coque réalise donc en une seule pièce via son méplat non seulement une fonction de protection mais également une fonction d'adaptateur du support à l'épaisseur du standard USB.

La clé peut être utilisée ainsi ou avec le cas échéant une bague métallique 68 de type USB (avec des perforations 69) venant cercler ensemble le méplat et l'extrémité du support.

Le support peut recevoir néanmoins une protection classique sous forme de film ou vernis ou feuille transparente laminée pour protéger l'impression.

De préférence, la demi-coque inférieure 61 est transparente de manière à laisser apparaître une autre personnalisation graphique réalisée au verso du support. Le cas échéant, la protection de surface est inutile puisque effectuée par la coque transparente.

Le cas échéant, le support 60 est lui-même en matériau transparent, notamment en ABS, polycarbonate, PET. Cela permet de réaliser une seule personnalisation graphique d'un seul côté visible sur le recto ou verso du support à travers la coque inférieure; cela permet aussi de réaliser un effet visuel en combinant les logos imprimés sur les deux faces du support.

La protection transparente sur la clé est de préférence réalisée par une demi-coque supérieure 70. Elle est disposée au-dessus du support de manière à couvrir une partie du support, en l'occurrence la partie arrière du support, en dehors des plages de contact et venir s'emboîter sur la coque inférieure et venir prendre le support en sandwich.

La demi-coque supérieure peut comporter un épaulement 71 de la largeur de la bague métallique et qui s'étend vers l'avant de la coque. L'épaulement peut s'étendre par exemple jusqu'à la limite des plages de contact ISO ou USB après assemblage sur le support. Les mêmes matériaux transparents peuvent être utilisés. La bague ou anneau métallique 68 peut alors venir entourer / cercler ensemble le méplat, l'épaulement, les contacts pour assurer un maintien supplémentaire des deux demi-coques inférieure et supérieure.

La demi-coque supérieure peut s'emboîter, à l'aide de tout moyen de fixation adapté sur la demi-coque inférieure. L'assemblage des coques peut se faire notamment par clipsage, collage, soudure ultrasons, vissage...

Le cas échéant, une personnalisation complémentaire peut être réalisée à travers la coque transparente sur le support notamment par laser.

Grâce à l'invention, l'impression et la personnalisation graphiques sont facilitées à plusieurs stades de la fabrication de la clé tout en garantissant leur protection mécanique et un remplacement aisée de leur protection en cas d'endommagement. On peut obtenir une clé ayant une excellente qualité de l'impression ou personnalisation graphique notamment en couleur à haute résolution au-delà notamment de 600 DPI grâce aux procédés d'impression utilisés couramment dans le domaine carte à puce.

En cas d'endommagement du boîtier, arrachement de l'anneau porte clés, rayures importantes, il est aisé de changer le boîtier sans avoir besoin d'effectuer une nouvelle personnalisation graphique avec les risques d'erreur d'appairage avec les données numériques de la puce.

Le procédé et la clé peuvent s'affranchir de la fixation de la coque supérieure 67.

Dans une variante non illustrée, l'ajustement en épaisseur s'effectue par une coque monobloc déjà assemblée dont la forme générale est équivalente à la forme résultant de l'enveloppe formée par les deux demi-coques précédentes mais qui présente une fente d'introduction frontale sur un chant avant entre le méplat et l'épaulement. Il suffit d'introduire la partie 52 du support par l'avant de la coque pour effectuer l'ajustement en épaisseur de la partie 51 avec le méplat 65. Le support et la coque peuvent comporter respectivement des moyens complémentaires de blocage en position l'un dans l'autre, par exemple creux/bossages formant un frein à l'extraction du support hors de la coque.

Cette coque est de préférence directement à la forme finale de la clé avec notamment des formes bombées vers l'arrière facilitant la manipulation ou participant à l'esthétique.

Enfin, pour compléter la clé, la partie avant de la coque peut comporter des moyens de fixation amovible d'un capuchon de protection 72.

Dans une variante, l'enveloppe de protection peut comporter uniquement une fenêtre transparente 75 disposée sur une coque (par exemple coque opaque), en regard de la personnalisation graphique du support. La fenêtre peut être simplement une ouverture traversant une coque dans la mesure où la personnalisation graphique peut comporter un film de protection, feuille laminée ou un revêtement transparent du type de ceux utilisé pour les cartes à puce.

On remarque que pour parvenir à une structure conforme à l'invention, il est nécessaire de ménager sur le support portant l'électronique une surface réservée à la personnalisation graphique qui soit libre de composant électronique et/ou de circuit. On peut y parvenir en concentrant l'électronique en dehors de la zone retenue pour l'impression et/ou personnalisation ou microcircuit notamment sous les plages de contact.

A la figure 6, on voit le dispositif électronique obtenu, de type clé USB 73. Il présente une forme relativement esthétique qui contient la personnalisation graphique 60 visible à travers la transparence de la coque supérieure. De préférence, la coque peut comprendre une perforation ou un anneau 74 en excroissance de la coque pour y loger une attache porte-clés. Contrairement à la plupart des clés USB sur le marché, la personnalisation graphique de l'invention a l'avantage d'être indissociable du circuit électronique ou module par l'intermédiaire d'un même support et de présenter la sécurité carte à puce. Même après remplacement de la coque, on ne risque pas des erreurs d'appairage et de rompre la sécurité mise en oeuvre au cours d'une fabrication d'un dispositif présentant un niveau de sécurité comme pour une carte à puce.

Comme pour la personnalisation électrique, l'impression et/ou la personnalisation graphique(s)sont réalisée(s) sur des machines tout à fait standards.

Les deux coques en plastique transparent sont clipsées (soudées par ultrasons ou collées) autour de la mini-carte à travers une opération simple manuelle ou facilement automatisable. De préférence, les deux coques ont des moyens d'assemblages de type démontable.

Cette étape ne comporte aucune difficulté car toute la personnalisation a déjà été effectuée.

Selon un mode de mise en oeuvre préféré, le procédé comporte dans l'ordre les étapes suivantes selon lesquelles on réalise un test électrique selon un protocole de communication; puis un graphisme décoratif notamment par impression sur au moins l'une des deux faces d'un corps de carte moulé ou laminé aux dimensions de la norme ISO, puis on colle le module dans une cavité préalablement ménagée dans le corps de carte, on personnalise électriquement et graphiquement la carte, et on extrait le support du corps de carte.

Une utilisation envisagée de l'invention est d'avoir une photographie du titulaire de la clé ou utilisateur comme graphisme ou personnalisation graphique, afin par exemple, d'identifier immédiatement le propriétaire de la clé.

Le cas échéant, le dispositif électronique comporte également une fonction de transpondeur. La puce électronique est par exemple du type hybride et comporte une fonction de communication sans contact, par exemple du type radiofréquence. A cet effet, une antenne peut être disposée soit dans le module type carte à puce, soit s'étendre dans ou sur le corps de carte ou la partie 52 du support portant l'impression graphique. L'antenne peut s'étendre de préférence autour de l'impression graphique en bordure du corps. Le cas échéant, la bague peut ne pas être métallique pour éviter de faire écran radiofréquence à l'antenne du module.

Il est possible de prévoir également une antenne relais ou antenne passive s'étendant dans le support et couplée avec l'antenne du module voire du circuit intégré de manière à augmenter la portée de communication. Cela permet également d'éviter une connexion électrique de l'antenne.

L'antenne peut être connectée au module de manière classique au microcircuit comme dans des cartes hybrides à contacts électriques et sans contact.

Comme il a été constaté, avec surprise, que la largeur d'une clé USB (environ 1, 4 mm) était sensiblement de la largeur d'une photographie de badge personnel d'accès, (du moins le visage), il a été déduit que la clé peut servir de badge d'identification et/ou de badge d'accès personnel de type sans-contact.

La clé peut être utilisée également comme clé sécurisée pour des accès Internet ou pour permettre un fonctionnement d'un poste de travail sécurisé.

Le cas échéant, un élargissement du support d'impression et de la coque peut être effectué au niveau de la photographie, de manière à avoir un support par exemple deux fois plus large que la largeur de la bague métallique ou trois fois plus, au niveau de l'impression.

Le support peut comprendre une ou plusieurs diodes de type led reliées au microcircuit et/ou antenne de manière à signaler une activité de communication ou de transaction ou de présence de champ électromagnétique ou de connexion. La diode peut être en surface du support dans la coque ou noyée dans le corps de carte. Un éclairage peut être effectué à travers le corps support même non transparent et visible de l'extérieur. La photo de l'individu peut être visible notamment par retro éclairage d'une diode dans le corps de carte.

L'impression et/ou personnalisation peut comporter une photographie d'un utilisateur et en ce que le dispositif comporte une diode Led pour éclairer la photographie et/ou l'impression

La diode led peut être placée dans le module type carte à puce, connectée par exemple à côté de la puce de circuit intégré et enrobée de manière que la lumière diffuse a travers le corps de carte, celui-ci pouvant par exemple être plus ou moins transparent ou avoir une fonction guide d'onde lumineuse. Un enrobage de protection de la puce et la diode led peut être en matériau transparent.

La diode peut être alimentée de différentes manières. Elle peut être alimentée par le port USB directement ou indirectement via une puce de communication.

Elle peut auto alimentée par une antenne qui lui est reliée et indépendante (sans connexion directe) de l'antenne principale du badge. L'antenne de la diode peut être couplée à l'antenne principale de manière à éviter des connexions à l'antenne principale RF reliée à la puce de circuit intégrée.

Dans la mesure ou une diode led peut émettre une lumière très intense, l'impression du support peut être un revêtement réfléchissant, par exemple métallique de manière à renvoyer un éclairage d'une diode. Une application serait de permettre un éclairage ou un signal en branchant le dispositif sur un port USB d'un objet par exemple portable ayant une source d'énergie tel un téléphone portable.

L'invention peut comprendre un mode de réalisation dans laquelle, la puce comprend plusieurs interfaces : une interface USB, une interface radiofréquence RF, le cas échéant une interface ISO, et le cas échéant une connexion pour la diode led émettrice.

Dans un autre mode de réalisation, on peut avoir la fonction sans contact radiofréquence réalisée par une autre puce sans contact reliée à une antenne et indépendante de la première puce.

## Revendications

1. Dispositif électronique comprenant une section destinée à être connectée dans un port d'un d'appareil externe et une section restant à l'extérieur de l'appareil pour manipulation,
- une impression et/ou une personnalisation graphique(s) sur un support,
- une enveloppe de protection (61, 70) recouvrant le support de manière à rendre visible l'impression et/ou la personnalisation graphique à travers l'enveloppe,
**caractérisé en ce que** le support portant l'impression et/ou personnalisation graphique(s) comprend également ladite connexion directe.

2. Dispositif selon la revendication 1, **caractérisé en ce que** l'enveloppe est une coque en matériau transparent.

3. Dispositif selon la revendication 1, **caractérisé en ce que** l'enveloppe comporte une fenêtre centrée sur l'impression et/ou personnalisation graphique(s).

4. Dispositif selon l'une des revendications 1 à 2, **caractérisé en ce que** le support (60) comprend un module électronique (56) comportant ladite connexion (57).

5. Dispositif selon l'une des revendications 1 à 4, **caractérisé en ce que** l'enveloppe (61, 70) est une coque enveloppant au moins une partie (52) du support.

6. Dispositif selon l'une des revendications précédentes, **caractérisé en ce que** l'impression et/ou personnalisation est une photographie d'un utilisateur et **en ce qu'**il comporte une antenne pour réaliser une fonction de communication radiofréquence.

7. Dispositif selon l'une des revendications précédentes, **caractérisé en ce que** l'impression et/ou personnalisation comporte une photographie d'un utilisateur et **en ce qu'**il comporte une diode Led pour éclairer la photographie et/ou l'impression.

8. Procédé de fabrication d'un dispositif électronique selon la revendication 1, ledit procédé comportant les étapes suivantes :
- réalisation d'un support comportant une connexion pour connecter directement un appareil externe,
- réalisation d'une impression et/ou personnalisation graphique(s) sur le même support,
- disposition d'une enveloppe de protection sur le dispositif de manière à rendre visible l'impression et/ou la personnalisation graphique(s) à travers l'enveloppe.

9. Procédé selon la revendication précédente, **caractérisé en ce que** le support est réalisé avec des contacts conformes à la norme USB.

10. Procédé selon la revendications 9, **caractérisé en ce qu'**il comporte une étape d'adaptation de l'épaisseur du support au niveau des contacts à l'épaisseur d'un port USB à l'aide d'un méplat (65) s'étendant (61) jusque sous les connexions.

11. Procédé selon l'une quelconque des revendications 8 à 10, **caractérisé en ce que** le support (60) est extrait d'un corps de carte (59) après une étape de personnalisation graphique et/ou électrique.

12. Utilisation du dispositif selon l'une quelconque des revendications 1 à 7 en tant que badge d'identification et/ou d'accès personnel.
